# EUROPEAN PATENT APPLICATION

(11) **EP 2 157 466 A1**
(43) Date of publication of application: **24.02.2010**
(21) Application number: 08776714.1
(22) Date of filing: 11.06.2008
(51) Int. Cl.: G02B 21/00

(54) **CONFOCAL MICROSCOPE DEVICE**

(30) Priority: 15.06.2007 JP 2007158574
(71) Applicant: Nikon Corporation, Chiyoda-ku Tokyo 100-8331 (JP)
(72) Inventor: OKUGAWA, Hisashi, Tokyo 100-8331 (JP)
(74) Representative: Zeitler - Volpert - Kandlbinder
(86) International application number: PCT/JP2008/001487
(87) International publication number: WO 2008/155883

(57) **Abstract**

A proposition of the present invention is to detect a change of state of an object in an optical axis direction even when the number of frame scans in each round is 1. In order to achieve the proposition, a confocal microscope apparatus of the present invention includes a light source (11); an illuminating optical system (12, 15, 161, 16) collecting light from the light source onto a sample (10) and performing scanning; a collecting optical system (16,161, 18) collecting light from the sample; a detecting unit (19, 20s, 20m) being disposed on a collecting location of the collecting optical system, separating incident light into at least a light from a vicinity of the collecting point on the sample and a light from a peripheral of the vicinity of the collecting point, and detecting each of the lights; and an image generating unit generating an image of the sample by performing calculation processing on a signal of the light from the vicinity of the collecting point (Is) and a signal of the light from the peripheral of the vicinity of the collecting point (Im) output from the detecting unit, in which the image generating unit calculates a distinction between a signal strength of the light from the vicinity of the collecting point and a signal strength of the light from the peripheral of the vicinity of the collecting point for each of a plurality of images generated in a number of times of scanning performed to cover a desired area of the sample without changing a collecting location of the illuminating optical system relative to the sample in an optical axis direction.

## Description

### TECHNICAL FIELD

The present invention relates to a confocal microscope apparatus.

### BACKGROUND ART

A time-lapse shooting with a confocal microscope is effective for observing a time change of an organism sample. Particularly, when a three-dimensional change or movement of the organism sample is captured, a z-stack shooting is conducted in each round of the time-lapse shooting.

However, scanning is repeatedly conducted while displacing a stage in an optical axis direction (Z direction) in the z-stack shooting, so that there are problems such that a time lag is generated while obtaining a plurality of image frames, a damage applied to a living cell is increased as the scanning is repeated, and an image quality is deteriorated due to a vibration of the stage and the like.

Meanwhile, Patent Document 1 discloses a confocal microscope that obtains, in one scanning, an image represented by emergent light from a viewing layer in a sample and an image represented by emergent light from bilateral layers of the viewing layer. A confocal microscope capable of obtaining a lot of information in one scanning as described above is considered to be effective for improving the aforementioned problems. Patent Document 1 : WO 2007/101697

### DISCLOSURE OF THE INVENTION

### PROBLEMS TO BE SOLVED BY THE INVENTION

However, if the confocal microscope is used as it is, the change or movement of the organism sample along the Z direction cannot be captured, and thus the aforementioned problems cannot be solved.

Accordingly, the present invention has a proposition to provide a confocal microscope apparatus capable of detecting a change of state of an object in an optical axis direction even when the number of frame scans in each round is 1.

### MEANS FOR SOLVING THE PROBLEMS

A confocal microscope apparatus of the present invention is **characterized in that** it includes a light source; an illuminating optical system collecting light from the light source onto a sample and performing scanning; a collecting optical system collecting light from the sample; a detecting unit being disposed on a collecting location of the collecting optical system, separating incident light into at least a light from a vicinity of the collecting point on the sample and a light from a peripheral of the vicinity of the collecting point, and detecting each of the lights; and an image generating unit generating an image of the sample by performing calculation processing on a signal of the light from the vicinity of the collecting point and a signal of the light from the peripheral of the vicinity of the collecting point output from the detecting unit, in which the image generating unit calculates a distinction between a signal strength of the light from the vicinity of the collecting point and a signal strength of the light from the peripheral of the vicinity of the collecting point for each of a plurality of images generated in a number of times of scanning performed to cover a desired area of the sample without changing a collecting location of the illuminating optical system relative to the sample in an optical axis direction.

Note that the image generating unit may reflect the distinction on each of the images.

Further, the distinction may be reflected on each of the images through a color image display for visualizing the distinction.

Further, the image generating unit may calculate a variation amount of the distinction among the plurality of images.

Further, the distinction may be a ratio of the signal strength of the light from the vicinity of the collecting point to the signal strength of the light from the peripheral of the vicinity of the collecting point.

Further, the distinction may be a difference between the signal strength of the light from the vicinity of the collecting point and the signal strength of the light from the peripheral of the vicinity of the collecting point.

Further, the image generating unit may have a storage unit storing the distinction being calculated.

Further, the storage unit may store the distinction by corresponding it to the image.

### EFFECTS OF THE INVENTION

According to the present invention, it is possible to detect a change of state of an object in an optical axis direction even when the number of frame scans in each round is 1.

### BRIEF DESCRIPTION OF THE DRAWINGS

Fig. 1 is a structural view of optical systems of a confocal microscope apparatus.
Fig. 2 is a view for explaining a light separating member 19.
Fig. 3 is a view for explaining an area on a focal plane of a collecting lens 18.
Fig. 4 is a view for explaining a viewing layer of a sample 10 and bilateral layers of the viewing layer.
Fig. 5 is a structural view of a control system of the confocal microscope apparatus:
Fig. 6 is a view showing a sensitivity characteristic of a fluorescence signal Is in a Z direction.
Fig. 7 is a view showing a sensitivity characteristic of a ratio signal Is/Im in the Z direction.
Fig. 8 is an operational flow chart of a CPU 221 of a first embodiment.
Fig. 9 is a view for explaining a look-up table.
Fig. 10 is a view showing a relationship between a hue signal I' and a position of the sample 10 in an optical axis direction (Z position).
Fig. 11 (A) is a view for explaining color images displayed on a monitor 23, and Fig. 11 (B) is a view in which states of displacement of objects in the Z direction estimated from the color images are visualized.
Fig. 12 is an operational flow chart of a CPU 221 of a second embodiment.

### BEST MODE FOR CARRYING OUT THE INVENTION

### [First Embodiment]

A first embodiment of a confocal microscope apparatus of the present invention will be described.

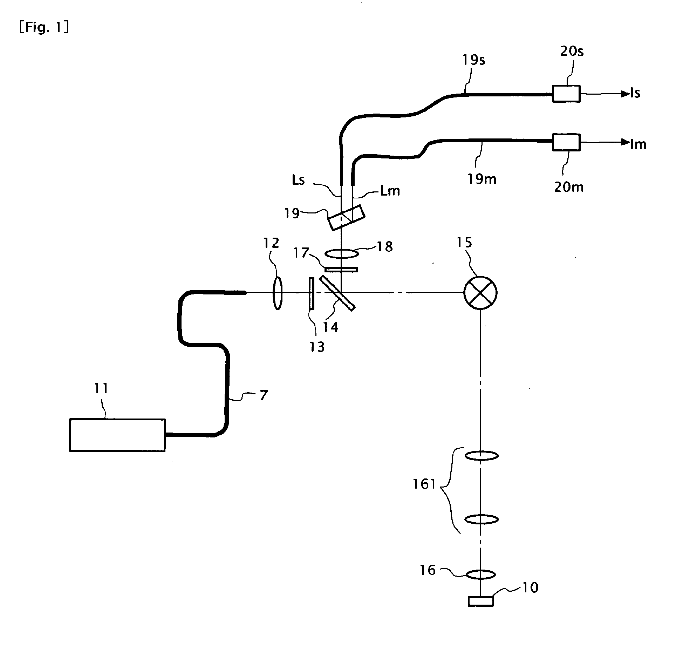

Fig. 1 is a structural view of optical systems of the confocal microscope apparatus. As shown in Fig. 1, in the confocal microscope apparatus, a laser unit 11, an optical fiber 7, a collimating lens 12, a filter 13, a dichroic mirror 14, a galvanometer scanner 15, a relay lens 161, an objective lens 16, a sample 10, a filter 17, a collecting lens 18, a light separating member 19, an optical fiber 19s, an optical fiber 19m, a light detector 20s, a light detector 20m, and the like are disposed.

The sample 10 is a cultured sample formed by culturing a living cell, and the living cell is previously dyed by a predetermined fluorescent material. A position of the sample 10 in an optical axis direction is previously adjusted by a not-shown vertically moving mechanism of the microscope so that a specimen (living cell or organella) exists on a focal plane of the objective lens 16. Hereinafter, an optical axis direction of the objective lens 16 is set as Z direction, and a layer of the sample 10 that exists within a focus depth of the objective lens 16 is referred to as "viewing layer".

The laser unit 11 emits laser light whose wavelength is the same as an excitation wavelength of the predetermined fluorescent material. The laser light emitted from the laser unit 11 propagates inside the optical fiber 7, and after being turned into parallel pencil of light by the collimating lens 12, it is incident on the dichroic mirror 14 via the filter 13. The laser light passes through the dichroic mirror 14, and after being sequentially reflected by two mirrors of the galvanometer scanner 15, it passes through the relay lens 161 and the objective lens 16, and is collected at one point on the viewing layer of the sample 10 and spread from there. The fluorescent material is excited in an area to which the laser light is irradiated, namely, a collecting point, and in the vicinity thereof, which results in generation of fluorescence.

The generated fluorescence passes through the objective lens 16, the relay lens 161, and the galvanometer scanner 15 5 by following, in the opposite direction, the same light path as that of the laser light directed to the collecting point, and advances toward the dichroic mirror 14. The fluorescence is reflected by the dichroic mirror 14, and is incident on the collecting lens 18 via the filter 17. The fluorescence is incident on the light separating member 19 while being collected by the collecting lens 18, and is separated into two fluorecences Ls and Lm. The details of the light separating member 19 will be described later.

The one fluorescence Ls separated in the light separating member 19 is incident on the light detector 20s after propagating inside the optical fiber 1 9s, and is converted into a fluorescence signal Is. The other fluorescence Lm separated in the light separating member 19 is incident on the light detector 20m after propagating inside the optical fiber 19m, and is converted into a fluorescence signal Im.

Accordingly, by synchronously driving the laser unit 11, the galvanometer scanner 15, the light detector 20s, and the light detector 20m, the above-described confocal microscope apparatus can obtain the two types of fluorescence signals Is and Im in a parallel manner while scanning the sample 10 with the laser light. Hereinafter, a direction of main scanning and a direction of vertical scanning are respectively defined as an X direction and a Y direction.

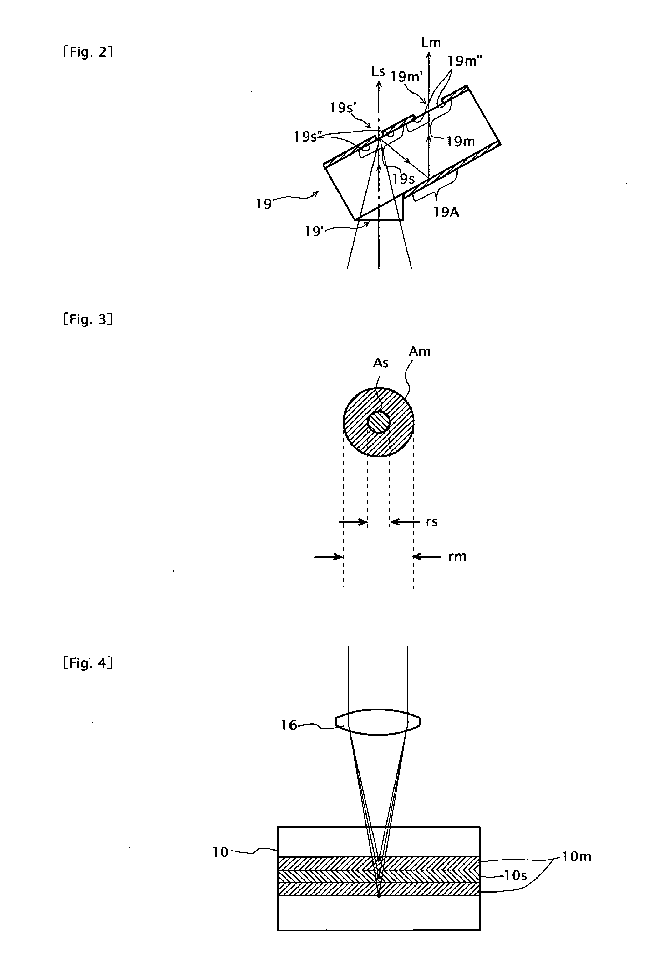

Fig. 2 is a view for explaining the light separating member 19. As shown in Fig. 2, the entire of the light separating member 19 is formed of a member transparent to the incident fluorescence, and a light separating surface 19s, a light separating surface 19m, and a reflecting surface 19A are formed on the member.

The light separating surface 19s is formed of a micro circular transmitting surface (pinhole) 19s' and a reflecting surface 19s" that covers a peripheral area of the pinhole 19s', and the light separating surface 19m is formed of a circular transmitting surface 19m' and a reflecting surface 19m" that covers a peripheral area of the transmitting surface 19m'. Among the above, the pinhole 19s' has a diameter rs corresponding to a diameter of the aforementioned collecting point, and the transmitting surface 19m' has a diameter rm that is larger than the diameter rs of the pinhole 19s' and is expressed by 2xrs, for example.

The fluorescence incident on the light separating member 19 from the collecting lens 18 is incident on the light separating surface 19s, and is separated into a fluorescence that transmits through the pinhole 19s' and a fluorescence that is reflected by the reflecting surface 19s". Between the two fluorescences, the one reflected by the reflecting surface 19s" advances toward the reflecting surface 19A, and after being reflected by the reflecting surface 19A, it is incident on the light separating surface 19m and separated into a fluorescence that transmits through the transmitting surface 19m' and a fluorescence that is reflected by the reflecting surface 19m". Among the above, the fluorescence transmitted through the pinhole 19s' is the aforementioned fluorescence Ls, and the fluorescence transmitted through the transmitting surface 19m' is the aforementioned fluorescence Lm.

Here, a disposition place of the pinhole 19s' and a disposition place of the pinhole 19m' can be regarded to exist on the same focal plane, since a difference in the optical path lengths is sufficiently small compared to a focus depth of the collecting lens 18.

As shown in Fig. 3, in an area on the focal plane of the collecting lens 18, the fluorescence Ls corresponds to a fluorescence that advances toward a circular area As of a center of the focal plane of the collecting lens 18, and the fluorescence Lm corresponds to a fluorescence that advances toward a ring-shaped area Am of an outside of the circular area As (a diameter of the circular area As corresponds to the aforementioned rs, and an outside diameter of the ring-shaped area Am corresponds to the aforementioned rm).

Emission sources of these respective fluorescences are shown in Fig. 4, in which the emission source of the fluorescence Ls that advances toward the circular area As is a viewing layer 10s of the sample 10, and the emission sources of the fluorescence Lm incident on the ring-shaped area Am are bilateral layers 10m of the viewing layer 10s. Accordingly, in the confocal microscope apparatus of the present embodiment, the fluorescence Ls from the viewing layer 10s and the fluorescence Lm from the bilateral layers 10m of the viewing layer are detected individually and in a parallel manner.

Note that it is also possible to omit the light separating member 19 and dispose a light detector capable of individually detecting an intensity of the fluorescence Ls and an intensity of the fluorescence Lm, on a place where the light separating member 19 is disposed. A light detecting surface of such a light detector has a light detecting area having the same shape as that of the circular area As, and a light detecting area having the same shape as that of the ring-shaped area Am.

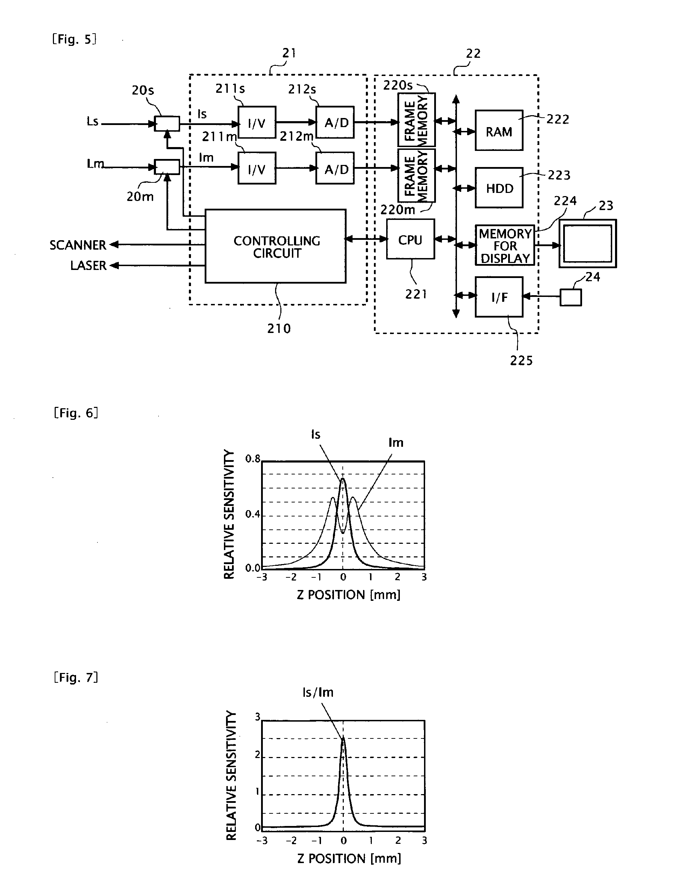

Fig. 5 is a structural view of a control system of the confocal microscope apparatus. A shown in Fig. 5, the confocal microscope includes a controller 21, a computer 22, a monitor 23, and an input device 24.

The controller 21 is provided with two current-voltage converters 211 s and 211 m, two A/D converters 212s and 212m, and a controlling circuit 210. The computer 22 is provided with a CPU 221, two frame memories 220s and 220m, a RAM 222, a hard disk drive 223, a memory for display 224, and an interface 225.

The fluorescence signal Is output from the light detector 20s passes through the current-voltage converter 211s, and is converted into a voltage signal. The fluorescence signal Is output from the current-voltage converter 211s passes through the A/D converter 212s, and is converted into a digital signal. The fluorescence signal Is output from the A/D converter 212s is input into the frame memory 220s.

The fluorescence signal Im output from the light detector 20m passes through the current-voltage converter 211m, and is converted into a voltage signal. The fluorescence signal Im output from the current-voltage converter 211m passes through the A/D converter 212m, and is converted into a digital signal. The fluorescence signal Im output from the A/D converter 212m is input into the frame memory 220m.

In accordance with a scanning indication from the CPU 221, the controlling circuit 210 performs scanning by synchronously controlling the aforementioned laser unit 11, the galvanometer scanner 15, the light detector 20s, and the light detector 20m. Through the scanning, the fluorescence signal Is for one frame and the fluorescence signal Im for one frame are accumulated in the frame memory 220s and the frame memory 220m, respectively, in a parallel manner. When the scanning is completed, the controlling circuit 210 gives an end signal to the CPU 221.
The fluorescence signal Is for one frame accumulated in the frame memory 220s through the scanning represents an image of the viewing layer 10s of the sample 10 (refer to Fig. 4), and the fluorescence signal Im for one frame accumulated in the frame memory 220m through the scanning represents an image of the bilateral layers 10m of the viewing layer (refer to Fig. 4).

In the hard disk drive 223 of the computer 22, a program for observation is previously stored, and the CPU 221 reads the program for observation on the RAM 222 and executes the program. At this time, the CPU 221 recognizes an indication from a user via the input device 24 and the interface 225, and gives the scanning indication to the controlling circuit 210 according to need.

Note that information the user can designate to the CPU 221 includes an observational period, a scanning frequency (interval), an observation beginning indication and the like. For instance, when the interval and the observational period are designated as 1 sec and 10 sec, respectively, the scanning number becomes 10.

Further, the CPU 221 can display the image of the viewing layer 10s on the monitor 23 by reading the fluorescence signal Is for one frame accumulated in the frame memory 220s at the time of scanning and writing the signal into a predetermined area of the memory for display 224. Further, the CPU 221 can display an image of all layers formed of both the viewing layer 10s and the bilateral layers 10m on the monitor 23 by reading the fluorescence signals Is and Im accumulated in the frame memories 220s and 220m at the time of scanning, generating a summation signal (Is+Im) being a resultant of the sum of both signals, and writing the summation signal into a predetermined area of the memory for display 224. Specifically, the CPU 221 can display an image of narrow sectioning width represented by the fluorescence signal Is, and an image of narrow sectioning width represented by the summation signal (Is+Im).

Further, although not described in detail here, the CPU 221 can also display an image represented by a summation signal (Is+αIm) being a resultant of weighting summation, and smoothly change a sectioning width by smoothly changing the coefficient α within a range of -1 to +1.

Further, it is also possible that the CPU 221 stores the images obtained through the scanning into the hard disk drive 223. At this time, the image represented by the fluorescence signal Is and the image represented by the fluorescence signal Im are preferably stored individually. This is because if the images are stored individually, various images having different sectioning widths can be generated any number of times at any timing.

Here, a relationship between a level of the fluorescence signal Is and a Z position in the sample 10 (sensitivity characteristic) can be represented by a thick curve in Fig. 6. It can be confirmed that the fluorescence signal Is includes a large number of signals of fluorescence emitted from the viewing layer (Z=-0.3 to +0.3). Note that the focal plane of the objective lens 16 exists at a position where the Z position becomes Z=0 in a horizontal axis in Fig. 6 (the same applies to the other drawings).

Further, a relationship between a level of the fluorescence signal Im and the Z position in the sample 10 (sensitivity characteristic) can be represented by a thin curve in Fig. 6. It can be confirmed that the fluorescence signal Im includes a large number of signals of fluorescence emitted from the bilateral layers of the viewing layer (in the vicinity of Z=-0.5, and in the vicinity of Z=+0.5).

Further, a ratio signal Is/Im of the fluorescence signal Is to the fluorescence signal Im is considered. A value of the ratio signal Is/Im differs depending on the Z position in the sample 10, and can be represented by a curve in Fig. 7. Therefore, even within the viewing layer (Z=-0.3 to +0.3), if the position from which the fluorescence is emitted is slightly different, the value of the ratio signal Is/Im differs depending on the position. Further, the value of the ratio signal Is/Im sensitively reacts to a change at a position in the vicinity of the viewing layer, but, it shows little reaction to a change at a position on the surface outside of the viewing layer. The CPU 221 of the present embodiment utilizes this phenomenon.

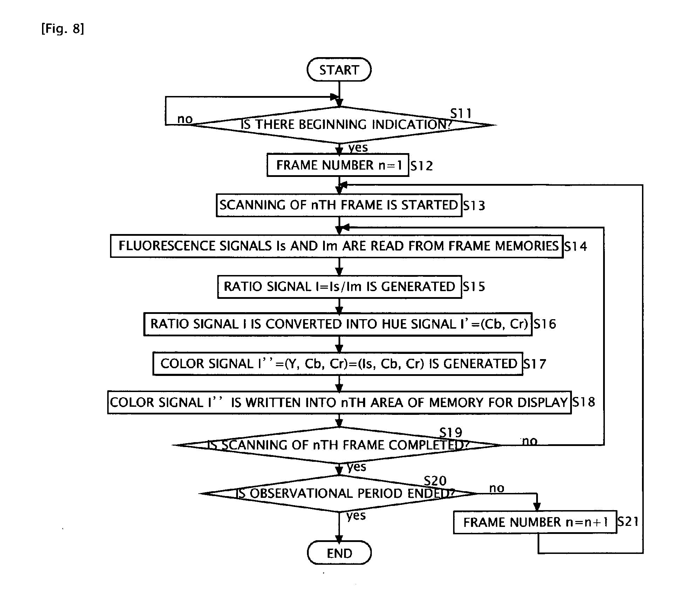

Fig. 8 is an operational flow chart of the CPU 221.

Step S11: The CPU 221 determines whether or not the observation beginning indication is input from a user. When the indication is input, the process proceeds to step S12.

Step S12: The CPU 221 sets a frame number n to an initial value "1".

Step S13: The CPU 221 gives the scanning indication to the controlling circuit 210. Accordingly, scanning of nth frame is started, and the fluorescence signals Is and Im are started to be accumulated in the frame memories 220s and 220m, respectively.

Step S14: The CPU 221 reads the fluorescence signals Is and Im accumulated in the frame memories 220s and 220m. The fluorescence signals Is and Im are assumed to be read by one line in the present step.

Step S15: The CPU 221 generates, based on the read fluorescence signals Is and Im for one line, a ratio signal I for one line. The ratio signal I in each pixel is expressed by Is/Im, using the fluorescence signals Is and Im having a pixel number common to the each pixel.

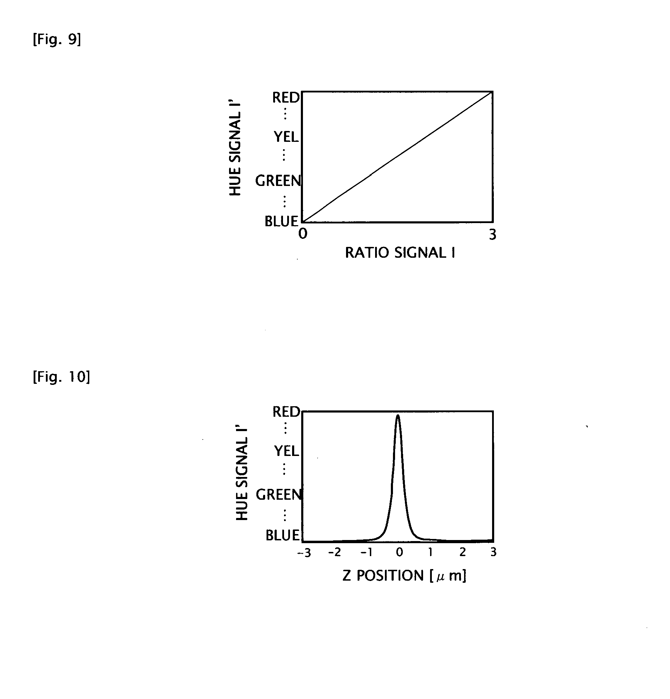

Step S16: The CPU 221 converts each of the generated ratio signals I for one line into a hue signal I'=(Cb, Cr). At this time, a look-up table having an input-output characteristic as shown in Fig. 9 is used, for example. According to this look-up table, the ratio signal I having a larger value is converted into the hue signal I' having a color close to red, and the ratio signal I having a smaller value is converted into the hue signal I' having a color close to blue.

In this case, a relationship between the hue signal I' and the Z position in the sample 10 is as shown in Fig. 10. Specifically, the hue signal I' represents a fluorescence emitted from a surface close to the focal plane within the viewing layer by a color close to red, represents a fluorescence emitted from a surface distant from the focal plane within the viewing layer by a color close to blue, and represents a fluorescence emitted from a surface outside of the viewing layer by a color of blue.

Step S17: The CPU 221 generates, based on the hue signal I' for one line and the fluorescence signal Is for one line, a color signal I"=(Y, Cb, Cr) for one line. To a Cb component and a Cr component of the color signal I" of each pixel in the line, values of a Cb component and a Cr component of the hue signal I' having a pixel number common to that of the each pixel are given, and to a Y component of the color signal I" of each pixel in the line, a value of the fluorescence signal Is having a pixel number common to that of the each pixel is given.

Step S18: The CPU 221 writes the color signal I" for one line into an address corresponding to the line in an nth area of the memory for display 224. The nth area corresponds to an area which is allocated to an image obtained through the scanning of the nth frame.

Step S19: The CPU 221 determines whether or not the scanning of the nth frame is completed, based on the presence/absence of the end signal from the controlling circuit 210. If the scanning is not completed, the process goes back to step S14 to start processing regarding the next line, and if the scanning is completed, the process proceeds to step S20.

Step S20: The CPU 221 determines whether or not the observational period designated by the user is ended, in which when the period is not ended, the process proceeds to step S21, and when it is ended, the flow is terminated.

Step S21: The CPU 221 increments the frame number n, and stands by until the interval period designated by the user is surely passed from the previous scanning start timing. Thereafter, the process goes back to step S13 to start processing regarding the next frame.

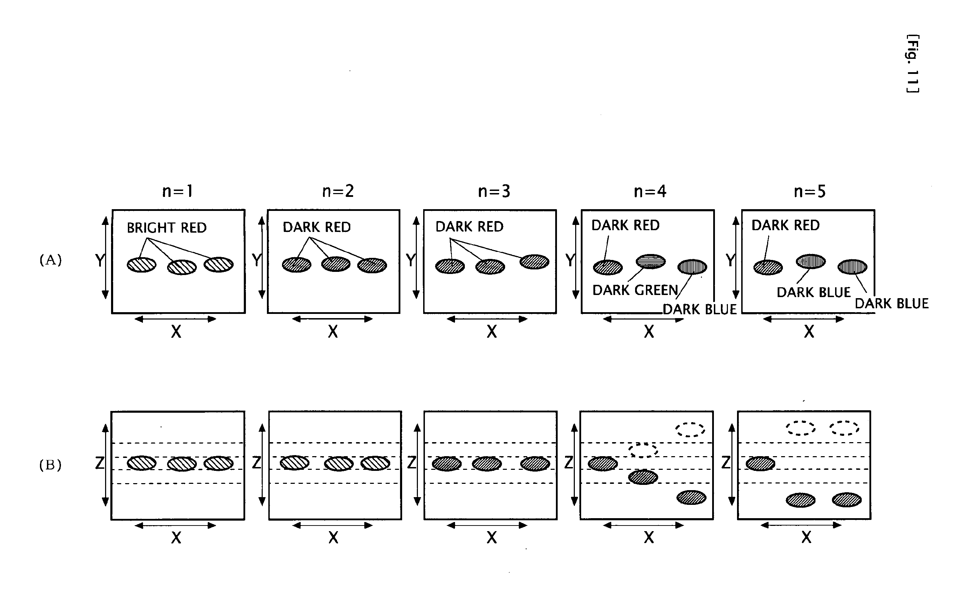

Through the above-described operation of the CPU 221, a plurality of color images represented by the color signals I" are displayed on the monitor 23 in the order of frames as shown in Fig. 11 (A), for example.

A pattern of the displayed color image indicates a distribution in the X-Y direction of an object that exists on the viewing layer. Further, a brightness of the color image indicates a fluorescence intensity (Y component of I") of the object that exists on the viewing layer. Further, a hue of the color image indicates a distance between the object that exists on the viewing layer and the focal plane (Cb component and Cr component of I").

For instance, focusing attention on the hue of the object positioned on the left side in the color images in Fig. 11 (A), the hue of the object remains red with no change in color, so that the user can estimate that the object was positioned in the vicinity of the focal plane of the viewing layer all the time and was not displaced in the Z direction.

Further, focusing attention on the hue of the object positioned on the center in the color images in Fig. 11(A), the hue of the object is changed in the order of "red, red, red, green, and blue" during the observational period, so that the user can estimate that although the object was positioned in the vicinity of the focal plane of the viewing layer at the beginning of the observational period, it was displaced in a direction to be distant from the focal plane around the fourth frame, and it was positioned out of the viewing layer around the fifth frame.

Further, focusing attention on the hue of the object positioned on the right side in the color images in Fig. 11 (A), the hue of the object is changed in the order of "red, red, red, blue, and blue", so that the user can estimate that although the object was positioned in the vicinity of the focal plane of the viewing layer at the beginning of the observational period, it was positioned out of the viewing layer around the fourth frame.

Further, focusing attention on the brightness of the respective objects in the color images in Fig. 11 (A), the brightness of the objects is changed in the order of "bright, dark, dark, dark, and dark" during the observational period, so that the user can estimate that the fluorescence intensities of the respective objects are lowered around the second frame. Since the respective objects were not displaced in the Z direction from the viewing layer around the second frame, this phenomenon is the one called "color fading" of the fluorescent material.

If the states of displacement of the objects in the Z direction estimated as above are visualized, it can be represented as Fig. 11 (B). However, it is unknown that the direction of displacement is the upper direction (dotted line portion) or the lower direction (solid line portion). Therefore, the user estimates the direction based on another information.

Accordingly, the confocal microscope apparatus of the present embodiment can detect a presence/absence of the movement of the object in the Z direction without performing the z-stack shooting. In addition, the hue signal I' reacts to a minute displacement of the object within the viewing layer (namely, within the focus depth of the objective lens) as shown in Fig. 10, so that the confocal microscope apparatus can detect a quite small movement.

Further, since the hue signal I' represents a different hue depending on the displacement amount of the object from the focal plane, the user can recognize the displacement amount of the object from the focal plane based on the hue of the color image displayed on the monitor 23.

Note that the CPU 221 of the present embodiment uses the ratio signal I=Is/Im for generating the hue signal I', but, it may use a differential signal I=Is-Im. In short, if a signal representing a distinction between the fluorescence signals Is and Im is used, it is possible to obtain substantially the same effect as that described above.

Further, the CPU 221 of the present embodiment performs the generation and display of the color images in real time during the observational period, but, it may perform the generation and display of the color images after the end of the observational period. Alternatively, only the display of the images may be performed after the end of the observational period.

Further, the CPU 221 of the present embodiment may store, in accordance with a storage indication or the like from a user, the generated color images in the hard disk drive 223. At this time, it is preferable that a color image represented by the color signal I", a monochrome image represented by the fluorescence signal Is, and a monochrome image represented by the fluorescence signal Im are corresponded for each frame.

Further, the CPU 221 of the present embodiment may generate moving images by connecting the color images of the respective frames in the order of frames.

Further, although the CPU 221 of the present embodiment reflects the displacement amount of the object from the focal plane together with the fluorescence intensity of the object on the components (hue component and brightness component) of one image, the image representing the displacement amount of the object from the focal plane may be generated separately from the image representing the fluorescence intensity of the object.

### [Second Embodiment]

A second embodiment of a confocal microscope of the present invention will be described. Here, only a difference from the first embodiment will be described. The difference is in the operation of the CPU 221.

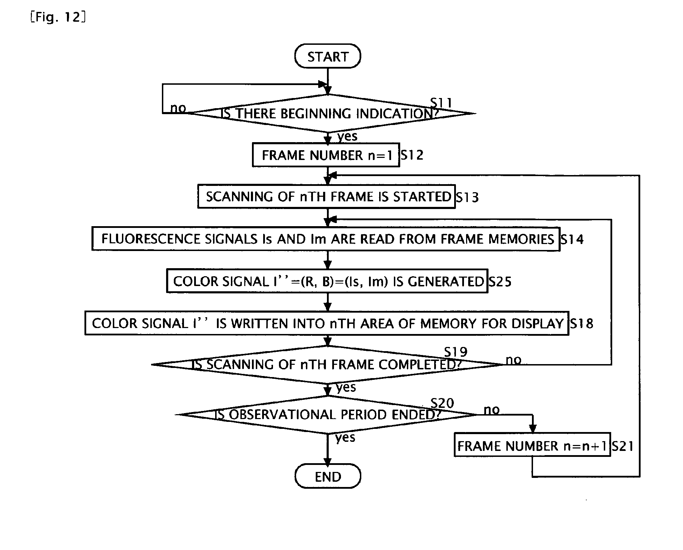

Fig. 12 is an operational flow chart of the CPU 221 of the present embodiment. A difference from the flow chart shown in Fig. 8 is that step S25 is executed instead of steps S15, S16, and S17. Hereinafter, step S25 will be described.

Step S25: The CPU 221 generates, based on the fluorescence signals Is and Im for one line, a color signal I"=(R, B) for one line. The color signal I" is a two-colored color signal formed only of an R-color component and a B-color component. To the R-color component of the color signal I" of each pixel, a value of the fluorescence signal Is having a pixel number common to the each pixel is given, and to the B-color component of the color signal I" of each pixel, a value of the fluorescence signal Im having a pixel number common to the each pixel is given.

In this case, the color image displayed on the monitor 23 has two colors, in which a brightness of an object that exists on the color image indicates a fluorescence intensity of the object, and a hue of the object that exists on the color image indicates a distance between the object and the focal plane. A user of the confocal microscope apparatus of the present embodiment can estimate that when the hue of the object is close to red on the color image, the object is positioned close to the focal plane, and when the hue of the object is close to blue on the color image, the object is distant from the focal plane.

Accordingly, the confocal microscope apparatus of the present embodiment can obtain an effect close to that of the confocal microscope apparatus of the first embodiment while performing the generation of color images through a simple calculation.

## Claims

1. A confocal microscope apparatus, comprising:
a light source;
an illuminating optical system collecting light from the light source onto a sample and performing scanning;
a collecting optical system collecting light from the sample;
a detecting unit being disposed on a collecting location of the collecting optical system, separating incident light into at least a light from a vicinity of the collecting point on the sample and a light from a peripheral of the vicinity of the collecting point, and detecting each of the lights; and
an image generating unit generating an image of the sample by performing calculation processing on a signal of the light from the vicinity of the collecting point and a signal of the light from the peripheral of the vicinity of the collecting point output from the detecting unit, wherein
the image generating unit calculates a distinction between a signal strength of the light from the vicinity of the collecting point and a signal strength of the light from the peripheral of the vicinity of the collecting point for each of a plurality of images generated in a number of times of scanning performed to cover a desired area of the sample without changing a collecting location of the illuminating optical system relative to the sample in an optical axis direction.

2. The confocal microscope apparatus according to claim 1, wherein
the image generating unit reflects the distinction on each of the images.

3. The confocal microscope apparatus according to claim 2, wherein
the distinction is reflected on each of the images through a color image display for visualizing the distinction.

4. The confocal microscope apparatus according to claim 1, wherein
the image generating unit calculates a variation amount of the distinction among the plurality of images.

5. The confocal microscope apparatus according to any one of claims 1 to 4, wherein
the distinction is a ratio of the signal strength of the light from the vicinity of the collecting point to the signal strength of the light from the peripheral of the vicinity of the collecting point.

6. The confocal microscope apparatus according to any one of claims 1 to 4, wherein
the distinction is a difference between the signal strength of the light from the vicinity of the collecting point and the signal strength of the light from the peripheral of the vicinity of the collecting point.

7. The confocal microscope apparatus according to any one of claims 1 to 6, wherein
the image generating unit has a storage unit storing the distinction being calculated.

8. The confocal microscope apparatus according to claim 7, wherein
the storage unit stores the distinction by corresponding the distinction to the image.
